# EUROPÄISCHE PATENTSCHRIFT

(11) **EP 1 335 196 B1**
(45) Veröffentlichungstag und Bekanntmachung des Hinweises auf die Patenterteilung: **29.11.2006**
(21) Anmeldenummer: 03010843.5
(22) Anmeldetag: 19.02.2001
(51) Int. Cl.: B01L 3/00, B01D 1/00, B01D 61/16, G11B 7/24

(54) **Unterdruckkammer mit Heizplatte zum Filtern und Beseitigen von Flüssigkeiten**
Evacuation chamber with heating plate for filtering and removing liquids
Chambre d'évacuation avec plaque de chauffage pour filtrer et éliminer des liquides

(30) Priorität: 22.02.2000 DE 10008023
(43) Veröffentlichungstag der Anmeldung: 13.08.2003
(62) Teilanmeldung aus: 01925336.8
(73) Patentinhaber: QIAGEN GmbH, 40724 Hilden (DE)
(72) Erfinder: Lutze, Konstantin, 8634 Hombrechtikon (CH); Collasius, Michael, 8634 Hombrechtikon (CH); Friederichs, Ulf, 8634 Hombrechtikon (CH)
(74) Vertreter: Schneider, Jürgen M.

(56) Entgegenhaltungen:
- EP-A- 1 252 522
- EP-A- 1 300 191
- WO-A-98/53912
- US-A- 5 137 604
- US-A- 5 264 184
- US-A- 5 342 581
- US-A- 5 380 437
- US-A- 5 645 723
- US-B1- 6 264 895

## Beschreibung

### Technisches Gebiet

Die Erfindung betrifft eine Unterdruckkammer zum automatisierten Filtern und Beseitigen von Flüssigkeiten und Flüssigkeitsresten.

### Stand der Technik

In vielen Anwendungsgebieten der Technik, insbesondere in der Chemie, Biologie und beim Umweltschutz, ist es erforderlich, Flüssigkeiten zu analysieren, in ihre Bestandteile zu zerlegen oder in Reaktion mit anderen Substanzen zu bringen. Zu diesem Zweck werden Flüssigkeiten gefiltert, getrocknet, gewaschen, pipettiert und anderen Behandlungen unterworfen, wobei unter Flüssigkeit grundsätzlich jede Substanz, die in flüssiger Form vorliegt oder die sich in einer Flüssigkeit befindet, zu verstehen ist.

Aus dem Stand der Technik sind unterschiedliche Apparaturen bekannt, die als Teil der Apparatur eine Unterdruckkammer aufweisen in denen es zu einer Erhitzung der Proben kommt. So wird beispielsweise in US 5,137,604 eine Vorrichtung zur Trocknung Lösungsmittel enthaltender biologischer Proben. offenbart. Die Trocknung erfolgt mittels einer Vakuum-Zenrifuge, welche mit einer Flüssigkeitsfalle in der Vakuum-Leitung verbunden ist. Zur schnelleren Verdampfung der Lösungsmittel wird die Probe in der Vakuum-Zentrifuge erhitzt. In US 5,380,437 wird eine multifimktionale Filtrationsapparatur beschrieben, welche eine Unterdruckkammer und eine damit verbundene Flüssigkeitsfalle aufweist. Bei dieser Vorrichtung können die gewünschten Reaktions- und Filtrationstemperaturen für die Innenbereiche der Unterdruckkammer mit Hilfe von Heizelementen eingestellt werden.

Oft bestehen die Behandlungen aus einer langen Kette von Behandlungsabläufen, so daß es erforderlich ist, diese Prozeduren mit Hilfe von Robotern zu automatisieren. So ist beispielsweise bereits seit einigen Jahren das System "BioRobot 9600" des Anmelders auf dem Markt, mit dem molekularbiologische Verfahrensabläufe wie z.B. das Filtern, Waschen und Eluieren von Nukleinsäuren oder das Isolieren von RNA und/oder DNA automatisch durchgeführt werden. Für diese Abläufe werden als Filtermodul bezeichnete Trägerkörper eingesetzt, die eine Vielzahl von in Matrixform angeordneten Behältnissen aufweisen. Diese Behältnisse haben oben eine Einlaßöffnung und weisen im unteren Teil eine Auslaßöffnung auf. In den Behältnissen befinden sich weiterhin Filterkörper in Form von geeigneten Membranen oder Filtern, die zum Binden der zu analysierenden Substanzen in den Flüssigkeitsproben geeignet sind.

Die internationale Anmeldung WO 01/55727 A1 offenbart ein immunologisches Versuchssystem mit einem Probentrennsystem. In das Probentrennsystem, das aus einer Vakuumkammer bestehen kann, können eine Vielzahl von Probenbehältern mit Filtern eingesetzt werden. Das Probentrennsystem befindet sich in der Nähe eines Heizgerätes oder wird in dieses eingeführt.

So werden zum Beispiel zur Erzeugung von hochreinen DNA-Plasmiden mittels einer Einzelpipetiervorrichtung zunächst Zellkulturen in Suspension gegeben, lysiert und anschließend mittels einer Pipetiervorrichtung in die Behältnisse der Trägerplatte gegeben. Anschließend werden die Trägerplatten mit den gefüllten Behältnissen so auf eine Unterdruckkammer aufgesetzt, daß die Auslaßöffnungen der Behältnisse in die Unterdruckkammer hineinragen. Durch das Anlegen eines Unterdrucks in der Unterdruckkammer werden die Flüssigkeiten in den Behältnissen durch die Filterkörper in die Unterdruckkammer gesaugt. In den Filterkörpern bleiben dabei die zu analysierenden Bestandteile nebst anderen Bestandteilen der Flüssigkeitsproben hängen. Um die interessierenden Bestandteile der Flüssigkeitsproben zu erhalten, müssen daher zunächst die nicht benötigten Substanzen aus den Filterkörpern herausgewaschen werden. Hierzu werden die Waschlösungen unterschiedlicher Konzentrationen in die Behältnisse pipettiert. Mittels dieser Waschlösungen wird ein Teil der nicht interessierenden Bestandteile der Flüssigkeitsproben von den Filterkörpern abgelöst. Anschließend werden mit Hilfe einer Eluitionslösung die interessierenden Bestandteile aus den Filterkörpern herausgelöst und aufgefangen.

Die in den einzelnen Schritten verwendeten Lösungen können jedoch die im folgenden Schritt verwendete Lösung kontaminieren. So können sich z.B. nach einem Waschschritt an den Auslaßöffnungen der Behältnisse aus Flüssigkeitsresten der Waschlösung Tropfen bilden, die vor dem folgenden Elutionsschritt zu entfernen sind. Dazu wurden früher die Trägerkörper bzw. Mikrotitrationsplatten von Hand mehrfach auf einer Unterlage mit saugfähigem Material fallengelassen, um diese Tropfen abzuschütteln. Wie in WO 98/53912 beschrieben, wurde das Entfernen der Restflüssigkeiten durch Anlegen eines Vakuums automatisiert.

In diesem Apparat fließen die durch die Filter gesaugten Flüssigkeiten, der Schwerkraft folgend, gewöhnlich zu einem Abscheider ab. Dort wird die Flüssigkeit gesammelt, so daß sie bei Bedarf wiederverwendet und/oder untersucht werden kann. Flüssigkeitsreste insbesondere im Filterkörperbereich oder an den Auslaßöffnungen der Behältnisse sind auf diese Weise jedoch nicht oder nur sehr langsam zu beseitigen. Der Trockenvorgang der Filterkörper und Auslaßöffnungen der Behältnisse dauert daher lang oder bleibt unvollständig. Es hat sich jedoch gezeigt, daß Flüssigkeitsreste weitgehendst beseitigt werden sollten, da sie die Reinheit der zu analysierenden Filterrückstände in den Behältnissen, die selber meist nur in kleinen Mengen vorhanden sind, beeinträchtigen und das chemische Verhalten verändern.

### Darstellung der Erfindung

Der Erfindung liegt daher die Aufgabe zugrunde, eine Unterdruckkammer bereitzustellen, die zum einen das Filtern von Flüssigkeiten bei Unterdruck und das Sammeln der gefilterten Flüssigkeiten ermöglicht, zum anderen aber auch das Beseitigen von Flüssigkeiten, insbesondere von Flüssigkeitsresten im Filterkörperbereich oder an den Auslaßöffnungen der Behältnisse möglichst vollständig und in kurzer Zeit durchführen kann, um damit die nach dem Stand der Technik bekannten Probleme zu vermeiden.

Zur Lösung dieser Aufgabe wird eine Unterdruckkammer gemäß Patentanspruch 1 angegeben. Die Unterdruckkammer weist eine Heizplatte auf zur Erwärmung von Bereichen der Unterdruckkammer. Bevorzugt ist die Heizplatte im Bodenbereich der Unterdruckkammer angeordnet. Besonders bevorzugt weist die Heizplatte Löcher auf. Vorzugsweise weist die erfindungsgemäße Unterdruckkammer eine Vakuumpumpe und einen Abscheider auf, wobei die Unterdruckkammer mittels einer ersten Leitung mit dem Abscheider verbunden und zwischen Unterdruckkammer und Abscheider eine erste Schließvorrichtung angeordnet ist, und wobei die Unterdruckkammer mittels einer zweiten Leitung mit der Vakuumpumpe verbunden ist, so daß die Unterdruckkammer unter Umgehung des Abscheiders evakuiert werden kann.

Es hat sich gezeigt, daß z.B. der Filterkörper durch seine Kapillarwirkung eine relativ große Menge an Flüssigkeit speichert, die durch das angelegte Vakuum nicht beseitigt wird. Durch Evakuieren der Unterdruckkammer unter Umgehung des Abscheiders können auch diese Flüssigkeiten beseitigt werden.

Unter Flüssigkeiten ist dabei grundsätzlich jede Substanz zu verstehen, die in flüssiger Form vorliegt oder die sich in einer Flüssigkeit befindet. Insbesondere werden darunter chemische und/oder biologische Proben bzw. sich in Flüssigkeiten befindende chemische und/oder biologische Proben und die zur Behandlung chemischer und/oder biologischer Proben benötigte Substanzen gemeint.

Unter Behandlung von Flüssigkeiten in einer Unterdruckkammer sind verschiedene auf Flüssigkeiten und/oder Flüssigkeitsreste bezogene Tätigkeiten in einer Unterdruckkammer zu verstehen, wie z.B. eine Flüssigkeit durch einen Filter ziehen, Flüssigkeitsreste durch Abpumpen oder Verdampfen beseitigen, was bevorzugt auch als Trocknung der Unterdruckkammer bezeichnet werden kann, sowie Flüssigkeiten in einem Gefäß sammeln bzw. Flüssigkeiten einen Weg zu einem Abscheider freimachen.

Unter Abscheider ist insbesondere eine Vorrichtung zu verstehen, die Flüssigkeiten auffangen und in einem Abscheidergefäß sammeln kann. Dabei kann das Abscheidegefäß bevorzugt groß genug sein, um einige 100 ml Flüssigkeit aufzunehmen. Das Auffangen wird z.B. dadurch erreicht, daß der Abscheider unterhalb einer zu sammelnden Flüssigkeit angeordnet ist, so daß die Flüssigkeit aufgrund der Schwerkraft in ein Abscheidergefäß fließt oder fällt; alternativ wird das Auffangen der Flüssigkeit auch durch Materialstrukturen erreicht, die dem Flüssigkeitsstrom, der z.B. durch eine Vakuumpumpe erzeugt ist, entgegenstehen, so daß sich die Flüssigkeiten an der Materialstruktur abscheiden und zum Abscheidergefäß fließen oder fallen. In einer bevorzugten Ausführung besteht der Abscheider aus einem geschlossenen Abscheidegefäß, das von oben kommend zwei Röhrchen aufweist, die in das Abscheidegefäß offen hineinragen. Das eine Röhrchen ist ein Zuflußrohr durch das die Flüssigkeiten durch Schwerkraft und/oder Sog durch eine Vakuumpumpe in das Abscheidegefäß transportiert und gesammelt werden; das andere Röhrchen ist das Ausgangsrohr, an das eine Vakuumpumpe angeschlossen ist. Das Ausgangsrohr endet über dem Flüssigkeitsspiegel, so daß die im Abscheidegefäß gesammelten Flüssigkeiten nicht zu der Vakuumpumpe gelangen können. Bevorzugt ist dabei die Öffnung des Ausgangsrohres oberhalb der Öffnung des Eingangsrohres angeordnet. Aber auch andere Verfahren zur Abscheidung von Flüssigkeiten können bevorzugt verwendet werden. Es können auch mehrere Abscheider in verschiedenen Anordnungen an die Unterdruckkammer oder an den Leitungen angebracht sein.

Die Evakuierung der Unterdruckkammer ohne Abscheider erfolgt durch eine (oder auch mehrere) Vakuumpumpen, die an die Unterdruckkammer angeschlossen sind, wobei der Abscheider von der Unterdruckkammer oder der Vakuumpumpe getrennt ist. Die Trennung wird zweckmäßig durch eine Schließvorrichtung, erreicht. Unter Schließvorrichtung ist z.B. eine Vorrichtung mit Eingang und Ausgang zu verstehen, die zwischen Durchlaß oder Sperrung umgeschaltet werden kann. Bevorzugte Schließvorrichtung ist z.B. ein vakuumtaugliches Sperrventil. Ist der Abscheider von der Unterdruckkammer so abgetrennt, daß es keine größeren mit der Unterdruckkammer in Verbindung stehende Flüssigkeitsreservoirs in der Unterdruckkammer gibt, so kann mit der Vakuumpumpe schnell ein hoher Unterdruck erreicht werden, der verbliebene Flüssigkeitsreste schneller zum Verdampfen bringt.

Mit der beschriebenen Vorrichtung können, wenn der Abscheider an die Unterdruckkammer angeschlossen ist, Flüssigkeiten in den Abscheider geleitet werden und, wenn der Abscheider von der Unterdruckkammer abgetrennt ist, die Unterdruckkammer und andere darin angeordneten Vorrichtungen von Flüssigkeitsresten befreit werden.

In einer weiteren Ausführungsform weist die Vorrichtung, die mit der erfindungsgemäßen Unterdruckkammer verwendet werden kann, eine erste Leitung auf, die die Unterdruckkammer über den Abscheider mit einer ersten Vakuumpumpe verbindet. Die Pumpe fördert das Transportieren der Flüssigkeiten in den Abscheider.

Vorteilhaft ist zwischen Abscheider und Unterdruckkammer und bevorzugt auch zwischen Abscheider und Vakuumpumpe eine Schließvorrichtung angeordnet, die wiederum z.B. ein vakuumtaugliches Sperrventil sein kann. Über die erste Leitung kann die Unterdruckkammer, unter Einbeziehung des Abscheiders, abgepumpt werden. Ist der Abscheider mit Flüssigkeit gefüllt, so verläuft der Evakuierungsprozeß langsam, da die im Abscheider liegende Flüssigkeit durch Verdampfen über lange Zeit Gas nachliefert. Solange die Flüssigkeit im Abscheider nicht vollständig verdampft ist, kann auch kein hoher Unterdruck erzielt werden. Durch die Schließvorrichtung wird dies vermieden.

Gemäß einer weiteren Ausführungsform weist die Vorrichtung, die mit der erfindungsgemäßen Unterdruckkammer verwendet werden kann, eine zweite Leitung auf, die die Unterdruckkammer mit einer zweiten Vakuumpumpe verbindet. Da hier kein mit Flüssigkeit gefüllter Abscheider in der Leitung angebracht ist, können bei gleicher Pumpleistung mit dieser Leitung die Unterdruckkammer schnell evakuiert und die Flüssigkeitsreste schnell beseitigt werden, vorrausgesetzt, daß der Abscheider durch die Schließvorrichtung von der Unterdruckkammer getrennt ist. Bevorzugt hat auch die zweite Leitung mindestens eine Schließvorrichtung, die dafür sorgt, daß im Filterungsprozeß keine Flüssigkeit von der Unterdruckkammer in die Vakuumpumpe gelangt.

Bevorzugt wird für die Vorrichtung anstatt zweier Vakuumpumpen nur eine Vakuumpumpe eingesetzt, um Kosten und Gewicht zu sparen. Die erste Leitung zwischen Abscheider und Vakuumpumpe und die zweite Leitung werden dabei bevorzugt durch ein Leitungs T-Stück zu einer Leitung zusammengelegt, bevor sie in den Ansaugstutzen der Vakuumpumpe münden. Bevorzugt werden auch die erste Leitung zwischen Abscheider und Unterdruckkammer und zweite Leitung, ebenfalls durch ein Leitungs T-Stück, zusammengelegt, um mit einer Leitung in die Unterdruckkammer zu münden.

Bevorzugt werden die erste und zweite Schließvorrichtung durch ein 3/2-WegeVentil ersetzt, um die Anzahl der anzusteuernden aktiven Komponenten zu reduzieren. Das 3/2-Wege-Ventil ist dabei so in das Leitungssystem eingebaut, daß der Eingang des 3/2-Wege-Ventils mit der Unterdruckkammer verbunden ist, während der erste der zwei Ausgänge des 3/2-Wege-Ventils zum Abscheider und der zweite Ausgang direkt zur Vakuumpumpe führt. Vorteilhaft ersetzt das 3/2-Wege-Ventil zwei Anschlüsse an die Unterdruckkammer bzw. das erste Leitungs T-Stück. Das 3/2-Wege-Ventil läßt sich in zwei Schalterpositionen schalten, wobei es in der ersten Schalterposition den Eingang mit dem ersten Ausgang verbindet und dabei den zweiten Ausgang versperrt, während es in der zweiten Schalterposition den Eingang mit dem zweiten Ausgang verbindet und den ersten Ausgang versperrt.

In einer weiteren Ausgestaltung der Erfindung werden vorteilhaft die weitere erste und weitere zweite Schließvorrichtung durch ein weiteres 3/2-Wege-Ventil ersetzt, um die Anzahl der anzusteuernden aktiven Komponenten zu reduzieren. Das weitere 3/2-WegeVentil ist dabei bevorzugt so in das Leitungssystem eingebaut, daß der Eingang des weiteren 3/2-Wege-Ventils mit der Vakuumpumpe verbunden ist, während der erste der zwei Ausgänge des weiteren 3/2-Wege-Ventils zum Abscheider und der zweite Ausgang am Abscheider vorbei zur Unterdruckkammer führt. Dies erlaubt die Verwendung einer Vakuumpumpe. Vorteilhaft ersetzt das weitere 3/2-Wege-Ventil auch das zweite Leitungs T-Stück. Das 3/2-Wege-Ventil läßt sich bevorzugt in zwei Schalterpositionen schalten, wobei es in der ersten Schalterposition den Eingang mit dem ersten Ausgang verbindet und dabei den zweiten Ausgang versperrt und in der zweiten Schalterposition den Eingang mit dem zweiten Ausgang verbindet und den ersten Ausgang versperrt.

In einer bevorzugten Ausführung ist die erfindungsgemäße Unterdruckkammer Bestandteil einer Vorrichtung zum Filtern von Flüssigkeiten. Das Vakuum in der Unterdruckkammer dient bevorzugt dazu, Flüssigkeiten, die in Behältnissen mit Filterkörpern in die Einlaßöffnungen eingegeben worden sind, durch die Filterkörper zu saugen. Die Unterdruckkammer ist für diesen Zweck bevorzugt so eingerichtet, daß sie eine Öffnung nach oben hat, in die ein oder mehrere dieser Behältnisse mit zu filternden Flüssigkeiten in die Unterdruckkammer eingelassen werden können. Die obere Öffnung der Unterdruckkammer und die Behältnisse sind so eingerichtet, daß Behältnis und obere Öffnung gasdicht miteinander abschließen. Solange Flüssigkeit oberhalb der Filterkörper im Behältnis steht, ist die Unterdruckkammer also weiterhin gasdicht abgeschlossen, so daß eine Vakuumpumpe einen Unterdruck in der Unterdruckkammer erzeugen kann. Dieser Unterdruck saugt die in den Behältnissen untergebrachten Flüssigkeiten durch die Filterköper, so daß ein schnelles Filtern ermöglicht ist. Erst wenn die Flüssigkeit in den Behältnissen vollständig durch die Filter gesaugt worden ist und die Filterung somit beendet ist, kann atmosphärische Luft durch die Filter in die Unterdruckkammer geraten.

Filtern ist hier in einem weiteren Sinne zu verstehen: es meint das Saugen von Flüssigkeiten in benannten Behältnissen durch die Filterkörper mit Hilfe eines Unterdrucks, wobei dieser Vorgang auch beim Waschen von Filterrückständen mit einer Lösung, insbesondere mit Ethanol, oder beim Eluieren von Filterrückständen mit einer Elutionslösung abläuft.

Beim Filtern werden die Schließvorrichtungen, insbesondere die Sperrventile und/oder die 3/2-Wege-Ventile der Leitungen bevorzugt so geschaltet, daß der Abscheider an die Unterdruckkammer angeschlossen ist und die Unterdruckkammer mit Abscheider evakuiert wird. Die durch die Filterkörper gesogene Flüssigkeit fließt so, durch Schwerkraft oder durch Pumpsog angetrieben, zum Abscheider. Dabei muß darauf geachtet werden, daß keine Flüssigkeit durch Sog oder Schwerkraft in die Vakuumpumpe gerät. Um das zu verhindern, wird entweder bevorzugt durch den Abscheider gepumpt, so daß die Flüssigkeit dort abgefangen wird, oder der Einlaß des Pumpstutzen in der Unterdruckkammer befindet sich an einem Ort, zu dem die Flüssigkeiten trotz Pumpsog nicht gelangen können. Dabei werden die beiden 3/2-Wege-Ventile bevorzugt beide in die erste Schalterposition geschaltet, so daß mit dem Abscheider evakuiert wird.

Gemäß eines weiteren Aspekts der Erfindung können Flüssigkeiten beseitigt werden, insbesondere Flüssigkeitsreste, die beim Filtern nicht in den Abscheider abgeflossen sind, sondern in den Filterkörpern oder an den Auslässen der Behältnisse als Tropfen hängengeblieben sind oder an den Oberflächen innerhalb der Unterdruckkammer zurückgeblieben sind. Da diese Flüssigkeitsreste, insbesondere in den Filterkörpern, eine Analyse verfälschen können, sind diese auf ein Minimum zu reduzieren. Bevorzugt wird mit Hilfe eines Unterdrucks durch eine an die Unterdruckkammer angeschlossene Vakuumpumpe die Siedetemperatur der Flüssigkeit gesenkt, so daß die Flüssigkeit beschleunigt vergast. Um den Unterdruck zu maximieren wird bevorzugt ein Deckel auf die Unterdruckkammer aufgebracht, der die obere Öffnung der Unterdruckkammer gasdicht abschließt, da sonst die Kammer offen wäre. Das Gas wird durch die Vakuumpumpe abgesaugt.

Weiterhin erfolgt bevorzugt die Beseitigung von Flüssigkeiten dadurch, daß Schließvorrichtungen und Ventile den Abscheider von der Unterdruckkammer abtrennen und eine Vakuumpumpe, die nicht mit einem Abscheider verbunden ist, die Unterdruckkammer evakuiert. Da auf diese Weise der Abscheider nicht immer neues Gas durch verdampfende Flüssigkeit in die Unterdruckkammer nachliefern kann, kann der Unterdruck in der Kammer erhöht und damit die Siedetemperatur der Flüssigkeitsreste weiter gesenkt werden. Auf diese Weise erfolgt die Verdampfung der Restflüssigkeit schneller und rückstandsloser. Eine rückstandslose Beseitigung der Restflüssigkeiten ist insbesondere erforderlich in den Behältnissen und Filterkörpern, da sich hier oft kleine Mengen von zu analysierenden Substanzen befinden, die durch Restflüssigkeiten verunreinigt werden würden und daher falsche Resultate liefern würden. Dabei werden für die Beseitigung der Flüssigkeiten die beiden 3/2-Wege-Ventile in die zweite Schalterposition geschaltet, so daß ohne Abscheider evakuiert wird.

Gemäß einer weiteren Ausführungsform ist vorteilhaft an die Unterdruckkammer oder an einer anderen geeigneten Stelle ein Belüftungsventil angeschlossen, so daß die Unterdruckkammer belüftet werden kann. Die Belüftung erfolgt z.B. nach einem Schritt zur Beseitigung von Flüssigkeiten, da für eine Beseitigung von Flüssigkeiten ein mehrfacher Zyklus von Abpumpen und Belüften sich als vorteilhaft herausgestellt hat. Zweckmäßigerweise ist zwischen Belüftungsventil und Unterdruckkammer ein Drosselventil angebracht, mit dem beim Belüften ein zu schneller Druckanstieg, der die Unterdruckkammer oder die Flüssigkeiten in der Unterdruckkammer beschädigen oder durcheinander bringen würde, vermieden werden kann. Bevorzugt ist an die Unterdruckkammer oder an eine der Leitungen ein Drucksensor angebracht, mit dessen Hilfe der Druck in der Unterdruckkammer überwacht werden kann.

Bevorzugt umfaßt die Vorrichtung eine zentrale Steuerung für Schließvorrichtungen und Sperrventile, 3/2-Wege-Ventile, Belüftungsventil und/oder Vakuumpumpen. Mit dieser Steuerung kann die Vorrichtung überwacht und bequem gesteuert werden. Insbesondere können Abläufe wie Filtern, Beseitigung von Flüssigkeit und Belüften automatisiert, reproduzierbar wiederholt und damit leichter optimiert werden. Auch Fehlbedienungen kommen bei einem vollautomatischen Ablauf kaum noch vor.

Bevorzugt kann die Unterdruckkammer Behältnisse aufnehmen, mit denen Filterungen durchgeführt werden können: Bevorzugt haben die Behältnisse eine Einlaßöffnung, Filterkörper und eine Auslaßöffnung, so daß in die Einlaßöffnung eingegebene Flüssigkeiten mittels Schwerkraft oder Unterdrucksog durch den Filter zur Auslaßöffnung gelangen können. Bevorzugt sind diese Behältnisse in einer matrixartigen Struktur auf einer Trägerplatte angebracht, so daß bevorzugt mehrfache Filterungen parallel durchgeführt werden können. Die Löcher der Heizplatte sind dabei bevorzugt so ausgeformt, daß die Behältnisse mit einem unteren Teilbereich in die Löcher hineinragen können. Die Heizplatte mit den Löchern erwärmt dadurch bevorzugt die Behältnisse am Filterkörperbereich und am Auslaßbereich und trägt so zu einer beschleunigten Beseitigung von Flüssigkeitsresten im Filterbereich und Auslaßbereich bei. Auf diese Weise können die in den Filterkörpern angelagerten chemischen und/oder biologischen Substanzen, insbesondere die Nukleinsäuren, schnell und in großer Reinheit isoliert werden. Bevorzugt kann die Heizplatte auch zu einer Steuerung der Temperatur an den zu analysierenden Flüssigkeiten in den Behältnissen beitragen. Außerdem wird das Aufspritzen von Flüssigkeit auf die obere Fläche der Heizplatte vermieden sowie die Möglichkeiten von Kreuzkontaminationen reduziert.

Bevorzugt wird die Heizplatte durch ein Heizband, das im äußeren Bereich der Heizplatte angebracht ist, erwärmt. In einer bevorzugten Ausführung ist das Heizband um die Heizplatte herumgeführt. Bevorzugt ist die Heizplatte aus einem wärmeleitenden Material, so daß die Temperatur weitestgehend gleichmäßig über die gesamte Fläche verteilt ist.

Gemäß einer weiteren Ausgestaltung weist die Unterdruckkammer im Bereich der Seitenwände zumindest ein Heizungselement auf. Das Heizungselement dient dazu bei Bedarf die Seitenwände zu erwärmen, was vorteilhaft die Kondensation Flüssigkeiten und Flüssigkeitsresten an den im Verhältnis zur Heizplatte und Filterkörpern kälteren Seitenwänden verhindert. Auch zur Erwärmung der Flüssigkeiten in den Behältnissen kann das Heizelement bevorzugt dienen. Bevorzugt ist das Heizungselement ein Heizband, was bevorzugt in der Unterdruckkammerinnenwand angebracht ist.

Bevorzugt ist in der Unterdruckkammer mindestens ein Temperatursensor angebracht, mit dem die Temperatur in der Unterdruckkammer abgelesen werden kann. Bevorzugt steuert eine elektronische Einheit die Temperatur an der Heizungsplatte und/oder der Heizungselemente, was für eine schonende Behandlung der Flüssigkeiten und einen schnellstmöglichen Trockenvorgang vorteilhaft ist. Die elektronsiche Steuerung der Heizplatte und/oder Heizungselement ist weiterhin nützlich für einen automatisierten Ablauf von Heizungszyklen.

Mit der erfindungsgemäßen Unterdruckkammer kann ein Verfahren zur Beseitigung von Flüssigkeiten mit den folgenden Schritten durchgeführt werden:
a) die Unterdruckkammer wird luftdicht abgeschlossen;
b) die Unterdruckkammer wird mit der Vakuumpumpe verbunden und der Abscheider wird abgetrennt;
c) die Vakuumpumpe wird eingeschaltet und die Unterdruckkammer wird abgepumpt.

Bevorzugt wird die Unterdruckkammer luftdicht abgeschlossen, um einen möglichst guten Unterdruck zu erreichen, was die Beseitigung der Flüssigkeitsreste deutlich beschleunigt. Bevorzugt wird das Verfahren angewendet, um die Filter mit den zu analysierenden Filterrückständen zu trocknen, d.h. wenn die Behältnisse innerhalb der Unterdruckkammer angeordnet sind. Um die Unterdruckkammer mit den darin angeordneten Behältnissen gasdicht abzuschließen, wird bevorzugt ein Deckel, der die Behältnisse überdeckt und gasdicht mit der Öffnung in der Unterdruckkammer abschließt, auf die Unterdruckkammer gesetzt.

Bevorzugt wird die Unterdruckkammer mit einer Vakuumpumpe verbunden und der Abscheider wird von der Unterdruckkammer und Vakuumpumpe abgetrennt. Bevorzugt wird dann die Vakuumpumpe eingeschaltet. Die Abwesenheit des Abscheiders von der zu evakuierenden Unterdruckkammer verbessert das Vakuum, da keine verdampfende Flüssigkeit aus dem Abscheider in die zu evakuierende Unterdruckkammer treten kann. Damit erhöht sich deutlich die Geschwindigkeit, mit der die zu beseitigenden Flüssigkeiten verdampfen und abgepumpt werden können.

Bevorzugt wird nach einer Zeit des Abpumpens die Unterdruckkammer belüftet. Dieser Schritt wird bevorzugt dann ausgeführt, wenn die Beseitigung der Flüssigkeiten durch einen mehrfach zu wiederholenden Zyklus aus Abpumpen und Belüften beschleunigt werden soll.

Bevorzugt wird in dem Verfahren Ethanol beseitigt, das eine bevorzugte Waschlösung für Nukleinsäuren und die Isolierung von Flüssigkeiten mit DNA oder RNA darstellt.

Bevorzugt wird zur Beseitigung der Flüssigkeiten die Unterdruckkammer durch Heizelemente oder die Heizplatte erwärmt, um die Verdampfung zu beschleunigen. Bevorzugt wird auf eine Temperatur oberhalb des Siedepunkts geheizt, was zur schnellstmöglichen Beseitigung der Flüssigkeiten führt. Da der Siedepunkt einer Flüssigkeit mit steigenden Unterdruck fällt, ermöglicht ein gutes Vakuum ein Sieden schon bei niedrigen Temperaturen.

Bevorzugt wird das Verfahren durch eine elektronische Einheit gesteuert, da dadurch die Temperatur in der Unterdurckkammer, die Zeitdauern des Pumpens und Zeitpunkte des Belüftens sowie die einzustellenden Heiztemperaturen in der Unterdruckkammer optimal und reproduzierbar geregelt und automatiseirt werden kann.

### Kurze Beschreibung der Zeichnungen

In den Zeichnungen sind Ausführungsbeispiele der Erfindungen dargestellt.
Es zeigen:
- Fig. 1: Aufbau einer Vorrichtung zur Behandlung von Flüssigkeiten in der erfindungsgemäßen Unterdruckkammer, insbesondere zur Filterung und Beseitigung von Flüssigkeiten in der Unterdruckkammer mit elektronischer Steuerung;
- Fig.2 - Fig. 8: Weitere Ausführungen der Vorrichtung zur Behandlung von Flüssigkeiten in der erfindungsgemäßen Unterdruckkammer, insbesondere zur Filterung und Beseitigung von Flüssigkeiten in der Unterdruckkammer;
- Fig.9: Eine bevorzugte Ausführung einer Unterdruckkammer zur Behandlung von Flüssigkeiten, insbesondere zur Filterung, Waschen und Trocknung von Flüssigkeitsproben

### Ausführungen der Erfmdung

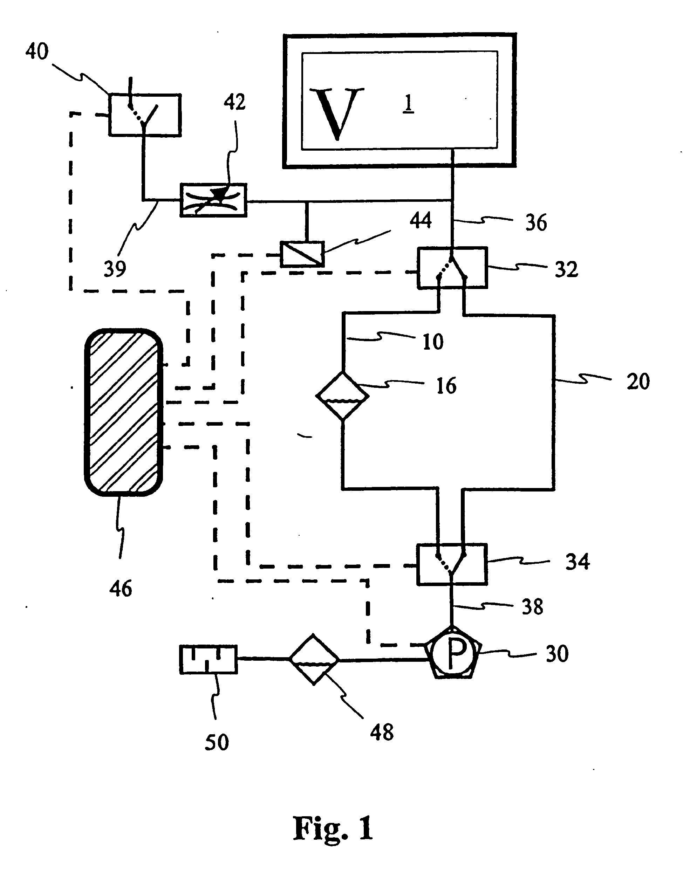

Fig. 1 zeigt schematisch eine Ausführung einer Vorrichtung zur Behandlung von Flüssigkeiten in einer Unterdruckkammer, insbesondere zur Filterung und Beseitigung von Flüssigkeiten. Die wesentlichen Elemente sind die Unterdruckkammer 1, der Abscheider 16 , die Vakuumpumpe 30 sowie das 3/2-Wege-Ventil 32 und das weitere 3/2-WegeVentil 34. Sind beide 3/2-Wege-Ventile in die erste Schalterposition geschaltet, so ist die Vakuumpumpe 30 ausschließlich über den Abscheider 16 mit der Unterdruckkammer verbunden. Sind beide 3/2-Wege-Ventile in die zweite Schalterposition geschaltet, so ist die Vakuumpumpe 30 ausschließlich unter Umgehung des Abscheiders mit der Unterdruckkammer verbunden.

Weitere Elemente der gezeigten Ausführung sind eine Belüftungsleitung 39 mit einem Belüftungsventil 40 und bevorzugt einem Drosselventil 42 zwischen Belüftungsventil 40 und Unterdruckkammer 1. Mit dem Drosselventil kann z.B. die Geschwindigkeit, mit der die Belüftung der Unterdruckkammer vor sich gehen soll, eingestellt werden. In der gezeigten Ausführung ist weiterhin ein Drucksensor 44 gezeigt, der an die Belüftungsleitung angeschlossen ist. Mit dem Drucksensor 44 wird der in der Unterdruckkammer herrschende Druck gemessen und überwacht. Grundsätzlich ist es nicht wesentlich wie lang die Belüftungsleitung ist und wo sie in die Unterdruckkammer einmündet. Mit einem geeigneten Aufbau kann möglicherweise auch ganz auf eine Belüftungsleitung verzichtet werden, wenn es gelingt, Belüftungsventil und/oder Drosselventil und/oder Drucksensor direkt an das Unterdruckgehäuse anzubringen. Entscheidend ist, daß das Belüftungsventil die Unterdruckkammer belüften kann und bevorzugt der Druck in der Unterdruckkammer mit Hilfe des Drucksensors gemessen werden kann.

Weiterhin sind hinter der Vakuumpumpe 30 ein weiterer Abscheider 48 und ein Geräuschdämpfer 50 gezeigt. Der weitere Abscheider 48 hat die Funktion, die durch die Pumpe abgegebenen Luft von Feuchtigkeit zu befreien und ggf. die durch die Vakuumpumpe nach hinten abgegebene Luft zu filtern.

Schließlich ist die elektronische Regelung 46 gezeigt, die die aktiven Komponenten des Systems, vor allem 3/2-wege-Ventile, Belüftungsventil, Pumpe und Drucksensor, liest und/oder regelt. Die elektronische Regelung 46 ist jedoch nicht nur auf die gezeigten Komponenten begrenzt; so können mit der Steuereinheit auch die Temperatur in der Unterdruckkammer geregelt oder das Abheben und Aufsetzen des Deckels 66 auf die Unterdruckkammer veranlaßt werden. Mit der elektronischen Steuerung kann so der Flüssigkeitsbehandlungsablauf, also z.B. eine hintereinander verlaufende Filter- oder Trockenprozedur, automatisiert und optimiert werden. Dies ist nicht nur ein Zeitgewinn, sondern ermöglicht größtmögliche Reproduzierbarkeit und Fehlerfreiheit bezüglich der Bedienung.

Fig. 1 zeigt eine Ausführung der Vorrichtung zum Behandeln von Flüssigkeiten in einer Unterdruckkammer. Durch Schalten der beiden 3/2-Wege-Ventile auf die erste Schalterposition kann man in der Unterdruckkammer 1 einen Unterdruck erzeugen, der z.B. zum Filtern benutzt wird, und die Flüssigkeit zum Abscheider 16 führen.

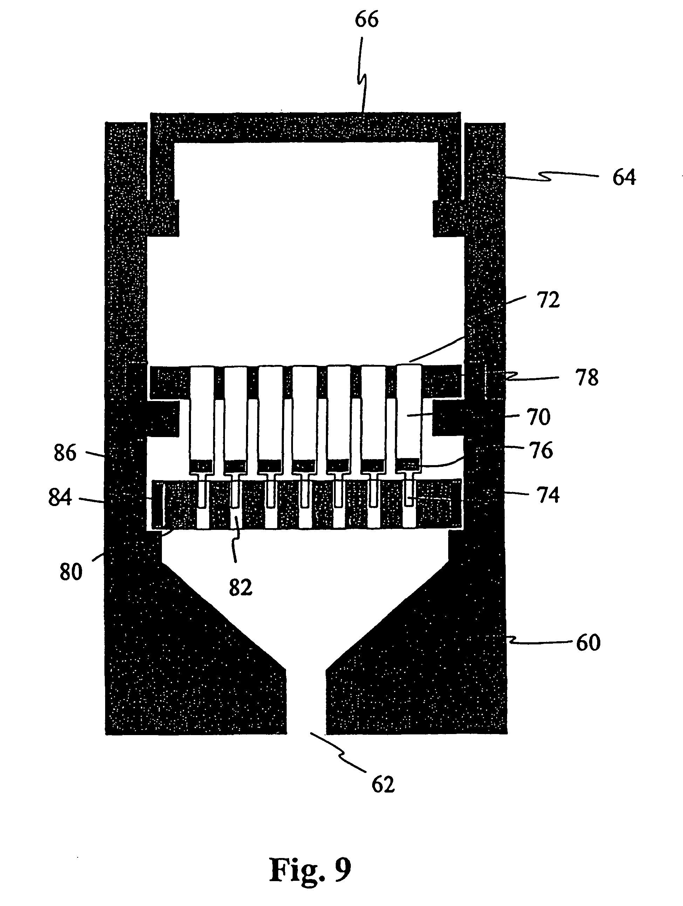

Sind beide 3/2-Wege-Ventile in Fig.1 in die zweite Schalterposition geschaltet, so können keine größeren Flüssigkeitsmengen aufgenommen werden, da die Flüssigkeiten dann leicht zur Vakuumpumpe 30 gelangen und die Vakuumpumpe 30 beschädigen können. Diese Schalterposition ist jedoch für die Beseitigung von Flüssigkeitsresten oder Trocknung der Unterdruckkammer 1 vorgesehen. In dieser Schalterposition ist der Abscheider 16 von der Unterdruckkammer abgetrennt, was das Evakuieren deutlich erleichtert, da vom Abscheider 16 keine verdampfte Flüssigkeit in die Unterdruckkammer 1 mehr gelangen kann. Weiterhin ist (wie in Figur 9 gezeigt) in einer bevorzugten Ausführung in dieser Schalterposition der Deckel 66 auf das Unterdruckgehäuse gasdicht aufgesetzt, so daß die Unterdruckkammer, bis auf den Abfluß 62, gasdicht abgedichtet ist. In der beschriebenen Ausführung kann der Druck so z.B. auf etwa 30 mbar reduziert werden, was etwa eine Größenordnung besser ist als wenn man mit angeschlossenem Abscheider evakuiert. Durch den so reduzierten Druck sinkt der Siedepunkt von Flüssigkeiten, so daß die z.B. von einer Filterung verbliebenen Flüssigkeitsreste an den Filterkörpern 76 der Behältnisse 70 oder an anderen Oberflächen in der Unterdruckkammer deutlich schneller verdampfen und durch die Vakuumpumpe 30 abgepumpt werden können. Die bessere Trocknung führt direkt zu besseren Resultaten, wenn es z.B. darum geht, Filterrückstände in möglichst reiner Form zu erhalten: z. B. gelingt es, durch die rückstandslosere Beseitigung der Waschlösung Ethanol im Waschprozeß zur Isolierung von Nukleinsäuren eluierte Nukleinsäuren mit einem Restethanolanteil von weniger als 0.5% zu erhalten.

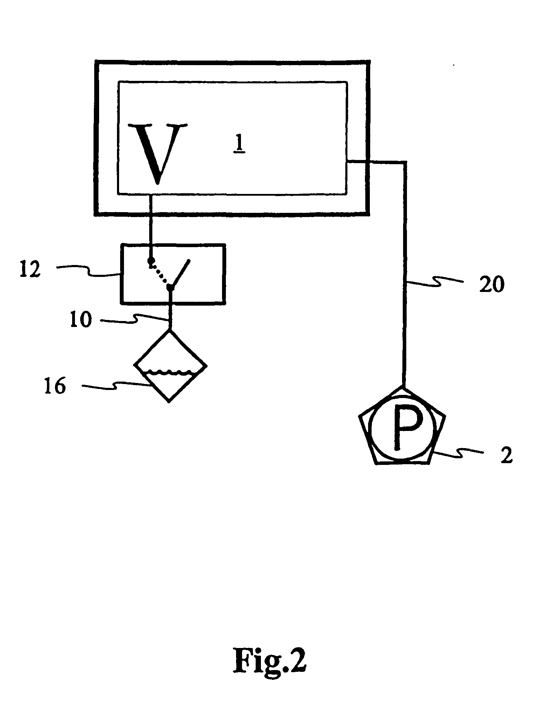

Fig. 1 ist eine Ausführung der Vorrichtung. Weitere Ausführungen sind in den Figuren 2 bis 8 gezeigt. Fig. 2 zeigt eine Ausführung eines minimalen Aufbaus, mit dem sowohl bei Unterdruck gefiltert als auch unter Umgehung des Abscheiders getrocknet werden kann. Ist die erste Schließvorrichtung 12 auf Durchlaß geschaltet, so kann gefilterte Flüssigkeit, durch Schwerkraft geleitet, in den unterhalb der Filterkörper liegenden Abscheider 16 fließen. Der Unterdruck für die Filterung wird durch die Vakuumpumpe 2, die mit einer Leitung 20 an die Unterdruckkammer 1 angeschlossen ist, bereitgestellt. In diesem Aufbau muß darauf geachtet werden, daß die Leitung 20 vor den durch die Filterkörper tretenden Flüssigkeiten geschützt ist, damit keine Flüssigkeit in die Vakuumpumpe geraten kann.

An dieser Stelle sei stellvertretend für alle anderen schematische Figuren 1 bis 8 gesagt, daß diese Figuren nicht festlegen, in welcher geometrischen Weise die erste Leitung 10 und die zweite Leitung 20 an die Unterdruckkammer angeschlossen sind. Sie können nebeneinander oder auch seitlich an der Unterdruckkammer angeschlossen werden oder aber auch z.B. auch über ein T-Leitungsstück zusammengeführt an die Unterdruckkammer angeschlossen werden. Die zum Abscheider führende Leitung ist in der Regel mit dem Boden der Unterdruckkammer verbunden, um die sich am Boden anreichernden Flüssigkeiten zu entfernen. Bevorzugt ist der Boden der Kammer konisch zulaufend ausgeformt, welches das Ablaufen der Flüssigkeiten fördert. In diesem Fall ist der Ablauf zweckmäßig an der tiefsten Stelle angeordnet. Ein zweiter, am Boden angebrachter Ablauf ist dann technisch aufwendiger zu realisieren. Der zweite Ablauf, insbesondere der für Vakuumpumpe 2, kann dann vorteilhaft an der Seite angebracht werden, da so ein Eindringen der Flüssigkeit in diese Leitung erschwert wird. Bei der Art des Anschließens der ersten Leitung 10 und der zweiten Leitung 20 ist lediglich darauf zu achten, daß die Vorrichtung funktional keine Einschränkungen erleidet.

Soll die Unterdruckkammer 1 von Flüssigkeitsresten befreit werden, so wird die Sperrvorrichtung 12 gesperrt und bevorzugt ein Deckel gasdicht auf die Unterdruckkammer aufgesetzt. Wie in Fig. 1 beschrieben kann die Unterdruckkammer nun unter deutlich besseren Unterdruckwerten gepumpt werden., so daß die Flüssigkeitsreste schneller verdampfen und abgepumpt werden können. Für die Wahl der Schließvorrichtung 12 bestehen hier wie in allen anderen Figuren keine besonderen Einschränkungen; bevorzugt ist die Schließvorrichtung ein vakuumtaugliches und ein auf chemische Angriffe widerstandsfähig reagierendes Sperrventil. Bei aller Einfachheit dieses Aufbaus liegt ein wesentlicher Nachteil dieser Ausführung darin, daß der Abscheider ohne unterstützende Vakuumpumpe die Flüssigkeit abfangen und sammeln muß. Auch besteht die Gefahr, daß die Vakuumpumpe 2 trotz Vorsichtsmaßnahmen durch Flüssigkeiten verunreinigt wird, da sie durch keine Sperre vor den Flüssigkeiten geschützt werden kann.

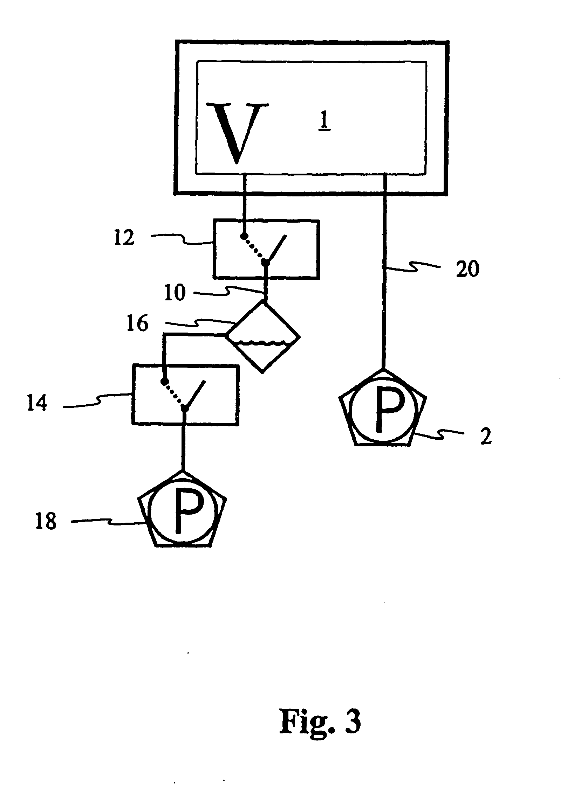

Fig. 3 zeigt eine Ausführung der Vorrichtung, die im Vergleich mit Fig. 2 durch eine weitere erste Schließvorrichtung 12 und eine weitere Pumpe 18, die an den Abscheider 16 angeschlossen ist, erweitert ist. Diese Vorrichtung hat gegenüber der Vorrichtung in Fig. 2 den Vorteil, daß zum Filtern die weitere Vakuumpumpe 18 den benötigten Unterdruck herstellt und nicht die ungeschützte Vakuumpumpe 2. So kann die Vakuumpumpe 2 beim Filtern ausgeschaltet werden, was die Gefahr der Schädigung der Pumpe durch eintretende Flüssigkeit reduziert. Vorteilhaft ist der Anschluß für die zweite Leitung an der Seite der Unterdruckkammer angebracht, um die Pumpe noch stärker vor eindringenden Flüssigkeiten zu schützen. Ein weiterer Vorteil dieser Ausführung ist der, daß die weitere Vakuumpumpe 18 dem Abscheider durch einen zusätzlichen Sog Unterstützung beim Abfangen und Sammeln der Flüssigkeit gibt.

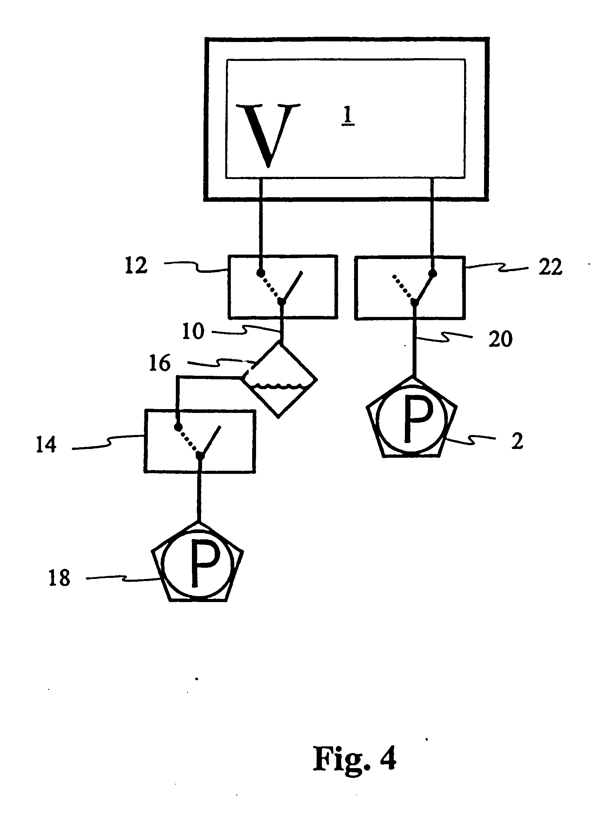

Die Ausführung von Fig. 4 unterscheidet sich bezüglich der Ausführung von Fig. 3 um eine zweite Schließvorrichtung 22, die zwischen der Vakuumpumpe 2 und der Unterdruckkammer 1 eingebaut ist. Die Schließvorrichtung kann die Vakuumpumpe 2 vor der Feuchtigkeit schützen, die beim Filtern anderenfalls in die Leitung 20 geraten und die Pumpe zerstören kann . Bevorzugt sollte das Sperrventil an der Mündung der Leitung 20 in die Unterdruckkammer angebracht sein, damit bei gesperrter Schließvorrichtung die dort angesammelte Flüssigkeit wieder in die Unterdruckkammer zurückfließen kann, bevor sich die Schließvorrichtung, z.B. zum Trocknen, wieder öffnet.

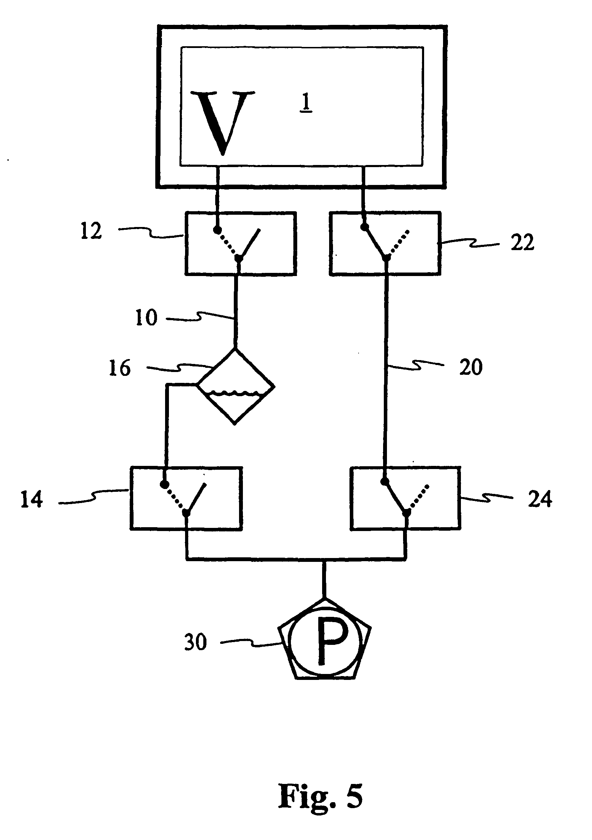

Fig. 5 unterscheidet sich von Fig. 4 zum einen durch eine weitere zweite Schließvorrichtung 24 und dadurch, daß die Vakuumpumpe 2 und die weitere Vakuumpumpe 18 durch eine Vakuumpumpe 30 ersetzt sind. Dies kann z.B. durch ein Leitungs-T-Stück erreicht werden, mit dem die beiden Leitungen 10 und 20 zusammengeführt werden, um mit einer gemeinsamen unteren Leitung 38 in die Vakuumpumpe zu gehen. Aber auch andere Ausführungen sind denkbar. Die Ausführung erspart eine Vakuumumpe in der Vorrichtung, was Kosten, Gewicht, Geräusch und Komplexität des Aufbaus einspart.

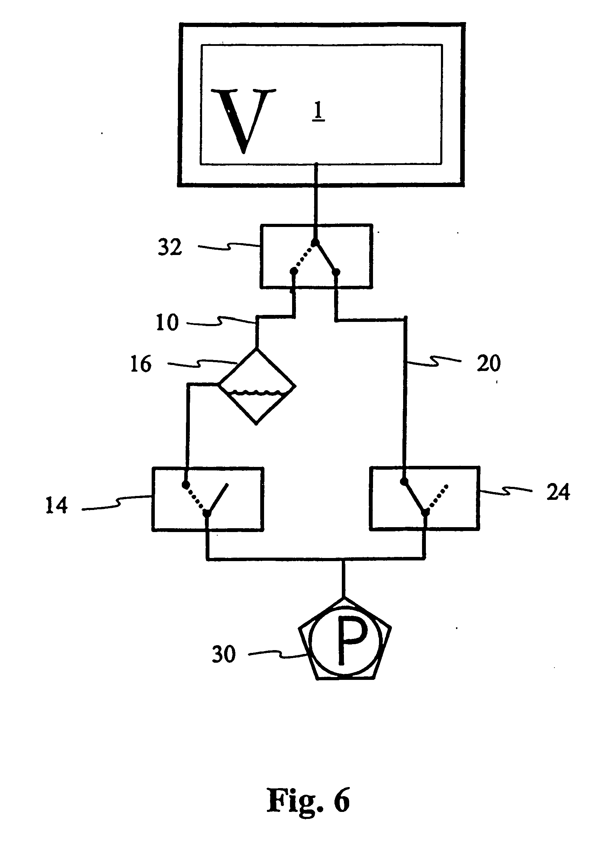

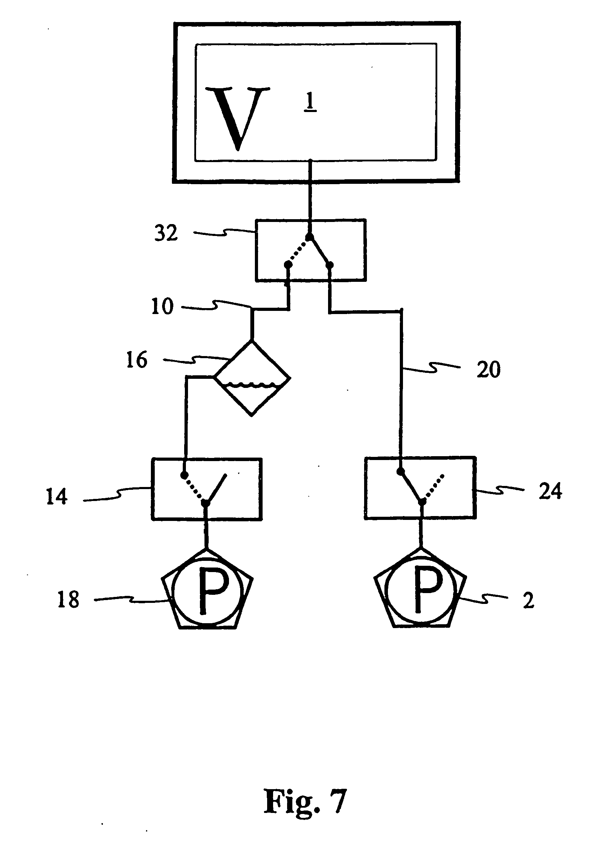

In Fig. 6 sind die beiden Schließvorrichtungen 12 und 22 zu einem gemeinsamen ersten 3/2-Wege-Ventil 32 zusammengefaßt. Dabei werden die Teile der ersten und zweiten Leitung 10 und 20, die zwischen Schließvorrichtung und Unterdruckkammer angeordnet sind, zu einer gemeinsamen oberen Leitung zusammengefaßt. Das erste 3/2-Wege-Ventil 32 ist so ausgelegt, daß entweder eine Verbindung von der Unterdruckkammer zur ersten Leitung 10 oder eine Verbindung von der Unterdruckkammer zur zweiten Leitung 20 hergestellt ist. Das Zusammenlegen der beiden Schließvorrichtungen zu einem 3/2-WegeVentil vereinfacht den Aufbau, da es die Anzahl der Leitungen und der zu steuernden Komponenten im System reduziert. Es bietet aber auch den Vorteil, daß sich Flüssigkeit, die sich in einem Aufbau wie in Fig. 5 an der gesperrten Schließvorrichtung 22 sammelt und beim Öffnen der Schließvorrichtung schädlicherweise zur Vakuumpumpe gelangen kann, hier nicht ansammeln kann, da sie beim Filtern jederzeit in den Abscheider gelangen kann. Auch andere Ventile als das 3/2-Wege-Ventil sind für den Einsatz im Leitungssystem an dieser Stelle denkbar. Sie alle müssen aber jene zwei Schaltzustände enthalten, mit denen die Flüssigkeit und abzupumpende Gase entweder nur in den Abscheider 16 oder nur zur Pumpe 30 gelangen können. Fig. 7 unterscheidet sich von Fig. 6 dadurch, daß die eine Pumpe 30 wieder durch eine Vakuumpumpe 2 und eine weitere Vakuumpumpe 18 ersetzt ist.

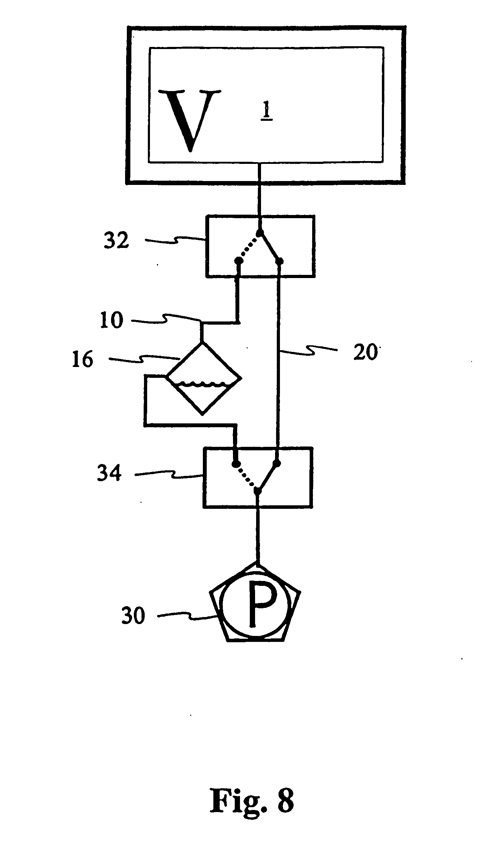

Die Ausführung von Fig. 8 ist schematisch identisch zu der in Fig. 1. In dieser Ausführung sind auch die beiden Schließvorrichtungen 14 und 24 aus Fig. 6 und Fig.7 durch ein weiteres 3/2-Wege-Ventil 34 ersetzt mit den gleichen Vorteilen wie für die Ausführung von Fig. 7. Außerdem ermöglicht es die Verwendung einer einzigen Pumpe. Alternativ könnte in Figur 7 die beiden sich an die Schließvorrichtungen anschließenden Leitungsabschnitte mittels eines T-Stückes zusammengefaßt und so in eine einzige Pumpe geführt werden.

Fig. 9 zeigt eine bevorzugte Ausführung einer Unterdruckkammer 1 zur Behandlung von Flüssigkeiten mit Heizplatte mit Löchern. Gezeigt sind ein Grundgehäuse 60 mit einem Abfluß 62. Auf das Grundgehäuse ist ein oberes Gehäuse 64 aufgesetzt, wobei die Auflageflächen zwischen Grundgehäuse 60 und oberem Gehäuse 64 im wesentlichen gasdicht miteinander abschließen. Der Deckel 66 auf dem oberen Gehäuse 64 schließt ebenfalls im wesentlichen gasdicht mit dem oberen Gehäuse 64 ab, so daß das Gesamtgehäuse der Unterdruckkammer 1 mit Grundgehäuse 60, oberem Gehäuse 64 und Deckel 66 bis auf den Abfluß 62 im wesentlichen gasdicht abgeschlossen ist. In einer bevorzugten Ausführung ist in der Unterdruckkammer 1 eine Trägerplatte 78 untergebracht, die Behältnisse 70 mit Einlaßöffnungen 72, Filterkörpern 76 und Auslaßöffnungen 74 aufnimmt. In einer bevorzugten Ausführung sind diese Behältnisse fest mit der Trägerplatte 78 verbunden und die Trägerplatte horizontal auf einer Abstützstruktur des Grundgehäuses 60 aufgesetzt. Auf diese Weise kann eine Flüssigkeit in die Einlaßöffnung 72 gegeben und durch die Filterkörper gesaugt werden, wenn am Abfluß durch eine Vakuumpumpe ein Unterdruck erzeugt wird. Weiterhin ist eine Heizplatte 80 mit Löchern gezeigt, in die bevorzugt die Behältnisse mit den Auslaßöffnungen 74 hineinragen. Bevorzugt können die Behältnisse auch bis zu den Filterkörpern oder weiter in die Löcher der Heizplatte hineinragen. Auf diese Weise ist ein schnelles Trocknen von den in den Filterkörpern 76 und Auslaßöffnungen 74 haftenden Flüssigkeitsresten gewährleistet. Die Heizplatte mit Löchern ermöglicht so z.B. ein schnelles Trocknen nach einem Waschvorgang mit einer Waschlösung wie Ethanol. Außerdem kann durch die Heizplatte 80 eine feste Temperatur eingestellt werden, um gewisse chemische Prozesse in den Behältnissen in vorteilhafter Weise zu unterstützen. In einer vorteilhaften Ausführung wird die Heizplatte 80 durch ein erstes Heizband 84 geheizt, wobei das Heizband in vorteilhafter Weise um die Heizplatte herumgeführt ist. Eine weitere Ausführung enthält ein zweites Heizelement 86 an der Wand der Unterdruckkammer, das vorzugsweise am Rand des Grundgehäuses befestigt ist. In vorteilhafter Weise ist es ein Heizband, welches in der Wand versenkt ist. Auch dieses Heizelement dient vorzugsweise der Trocknung der Vakuumkammer und ermöglicht eine regelbare Temperatur für die sich in der Unterdruckkammer befindenden Substanzen. Vorteilhaft wird durch das Heizen der Wände der Unterdruckkammer ein Abschlagen von bereits verdampften Ethanol aus dem Filter an den kälteren Wänden vermieden.

Die in Figur 9 gezeigte Unterdruckkammer 1 wird auch zur Filterung verwendet. Dazu wird Deckel 60 entfernt und die mit Behältnissen versehene Trägerplatte auf im oberen Teil des oberen Gehäuses 64 befindliche Stützen aufgelegt. Eine z.B. dort befindliche Dichtung sorgt für einen gasdichten Abschluß. In den Behältnissen befinden sich oberhalb des Filters biologische Proben in Flüssigkeit. Durch Betreiben einer an Abfluß 62 angeschlossenen Vakuumpumpe wird der Innenraum einem Unterdruck ausgesetzt, um die Flüssigkeit durch den Filterkörper 76 strömen zu lassen. Die durch die Filterkörper 76 gesaugte Flüssigkeit wird durch Schwerkraft und durch Vakuumpumpensog zum Abfluß 62 geführt, von wo sie zum Abscheider 16 gelangt.

### Bezugszeichenliste

- 1: Unterdruckkammer
- 2: Vakuumpumpe

- 10: erste Leitung
- 12: erste Schließvorrichtung
- 14: weitere erste Schließvorrichtung
- 16: Abscheider
- 18: weitere Vakuumpumpe

- 20: zweite Leitung
- 22: zweite Schließvorrichtung
- 24: weitere zweite Schließvorrichtung

- 30: gemeinsame Vakuumpumpe
- 32: erstes 3/2 Wegeventil
- 34: weiteres 3/2 Wegeventil
- 36: gemeinsame obere Leitung
- 38: gemeinsame untere Leitung
- 39: Belüftungsleitung

- 40: Belüftungsventil
- 42: Drosselventil
- 44: Drucksensor
- 46: elektronische Steuerung
- 48: weiterer Abscheider
- 50: Geräuschdämpfer

- 60: Grundgehäuse
- 62: Abfluß
- 64: Oberes Gehäuse

- 66: Deckel

- 70: Behältnis
- 72: Einlaßöffnung
- 74: Auslaßöffnung
- 76: Filterkörper
- 78: Trägerplatte

- 80: Heizplatte
- 82: Löcher
- 84: erstes Heizband
- 86: zweites Heizband

## Patentansprüche

1. Unterdruckkammer zum Filtern und Beseitigen von Flüssigkeiten, **dadurch gekennzeichnet, dass** die Unterdruckkammer eine Heizplatte (80) mit Löchern (82) und Behältnisse (70) mit einem Filterkörperbereich (76) aufweist und die Löcher der Heizplatte so ausgeformt sind, dass diese Flüssigkeiten aufnehmenden Behältnisse mit einem unteren Teilbereich in die Löcher hineinragen.

2. Unterdruckkammer nach Anspruch 1, **dadurch gekennzeichnet, dass** die Behältnisse (70) entnommen werden können.

3. Unterdruckkammer nach Anspruch 1 oder 2, **dadurch gekennzeichnet, dass** an der Unterdruckkammer ein Belüftungsventil angebracht ist.

4. Unterdruckkammer nach einem der Ansprüche 1-3, **dadurch gekennzeichnet, dass** eine elektronische Einheit die Regelung der Heizplatte (80) übernimmt.

5. Unterdruckkammer nach einem der Ansprüche 1-4, **dadurch gekennzeichnet, dass** die Unterdruckkammer im Bereich der Seitenwand zumindest ein Heizband aufweist.

6. Unterdruckkammer nach einem der Ansprüche 1-5, **dadurch gekennzeichnet, dass** die Unterdruckkammer mittels zwei Leitungen mit einer gemeinsamen oder zwei unterschiedlichen Vakuumpumpen verbunden ist, wobei sich in der ersten Leitung ein Abscheider befindet, wobei zwischen Unterdruckkammer und Abscheider eine erste Schließvorrichtung angeordnet ist, und in der zweiten Leitung kein Abscheider angebracht ist.

## Claims

1. Vacuum chamber for the filtration and removal of liquids **characterised in that** the vacuum chamber comprises a heating plate (80) with holes (82) and vessels (70) with a filter element region (76) and the holes of the heating plate are shaped such that the lower section of these vessels accommodating liquids extend into the holes.

2. Vacuum chamber according to claim 1, **characterised in that** the vessels (70) can be removed.

3. Vacuum chamber according to claim 1 or 2, **characterised in that** a venting valve is attached to the vacuum chamber.

4. Vacuum chamber according to one of the claims 1-3, **characterised in that** an electronic unit assumes the control of the heating plate (80).

5. Vacuum chamber according to one of the claims 1-4, **characterised in that** the vacuum chamber comprises at least one heating tape in the region of the side wall.

6. Vacuum chamber according to one of the claims 1-5, **characterised in that** the vacuum chamber is connected to one common or two different vacuum pumps by means of two pipelines, wherein a trap is located in the first pipeline, wherein a first shut-off device is situated between the vacuum chamber and the trap, and no trap is located in the second pipeline.

## Revendications

1. Chambre de dépression destinée à la filtration et à l'élimination de liquides, **caractérisée en ce que** ladite chambre de dépression présente une plaque-chauffante 80 pourvue de trous (82) ainsi que des conteneurs (70) avec une zone de corps de filtre (76), et **en ce que** les trous de la plaque-chauffante sont formés de telle sorte que ces conteneurs accueillant les liquides s'introduisent par leur partie inférieure dans lesdits trous.

2. Chambre de dépression selon la revendication 1, **caractérisée en ce que** les conteneurs (70) peuvent être retirés.

3. Chambre de dépression selon la revendication 1 ou 2, **caractérisée en ce qu'**une soupape d'aération est placée au niveau de ladite chambre de dépression.

4. Chambre de dépression selon l'une des revendications 1 à 3, **caractérisée en ce qu'**une unité électronique procède au réglage de la plaque-chauffante (80).

5. Chambre de dépression selon l'une des revendications 1 à 4, **caractérisée en ce que** ladite chambre de dépression présente au moins une bande chauffante au niveau de la paroi latérale.

6. Chambre de dépression selon l'une des revendications 1 à 5, **caractérisée en ce que** ladite chambre de dépression est reliée à une pompe à vide commune ou à deux pompes à vide différentes par l'intermédiaire de deux tuyaux ; un séparateur se trouve dans le premier tuyau, un premier dispositif de fermeture étant positionné entre la chambre de dépression et le séparateur, et le second tuyau est dépourvu de séparateur.
